(19) Europäisches Patentamt
European Patent Office
Office européen des brevets

(11) **EP 4 447 273 A1**

(12) **EUROPÄISCHE PATENTANMELDUNG**

(43) Veröffentlichungstag:
16.10.2024 Patentblatt 2024/42

(21) Anmeldenummer: 23167327.8

(22) Anmeldetag: **11.04.2023**

(51) Internationale Patentklassifikation (IPC):
***H02K 1/276*** (2022.01)

(52) Gemeinsame Patentklassifikation (CPC):
**H02K 1/276;** H02K 2213/03

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder: **Rettinger, Frank**
**97616 Bad Neustadt (DE)**

(74) Vertreter: **Siemens Patent Attorneys**
**Postfach 22 16 34**
**80506 München (DE)**

(54) **PERMANENTERREGTE SYNCHRONMASCHINE MIT OPTIMIERTEM MAGNETTASCHENDESIGN**

(57)     Die Erfindung betrifft einen Rotor (9) einer rotatorischen permanenterregten Synchronmaschine (1) mit vergrabenen, im Wesentlichen tangential angeordneten Permanentmagneten (14) pro Pol, die in im Wesentlichen axial verlaufenden Ausnehmungen (13) eines magnetisch leitfähigen Körpers, insbesondere eines axial geschichteten Blechpakets des Rotors (9) angeordnet sind, jede Ausnehmung (13) hat eine Tasche (36) zur Aufnahme eines oder mehrerer Permanentmagneten (14), mit Flusssperren (34) mit Mittel zur Erhöhung einer Gegenfeldstabilität, die als Stege vorgesehen sind,
wobei die Ausnehmung (13) derart gestaltet ist, dass die Gegenfeldstabilität auch den oder die Permanentmagnete (14) im mittleren Bereich der Tasche (36) gewährleistet ist, indem der geringste Abstand (D1) zwischen Mitte der Tasche (36) und Außendurchmesser (18) des Rotors (9) größer gleich dem 1,3-fachen der radialen Dicke (D0) der Tasche (36) entspricht,
und der geringste Abstand (D2) zwischen einer radial außenliegenden Ecke der Tasche (36) und dem Außendurchmesser des Rotors (9) größer gleich dem 0,7-fachen der radialen Dicke (D0) der Tasche (36) entspricht,
also D1 $\geq$ 1,3xD0 und D2 $\geq$ 0,7xD0.

FIG 2

EP 4 447 273 A1

**Beschreibung**

Die Erfindung betrifft einen Rotor einer permanenterregten Synchronmaschine und eine permanenterregte Synchronmaschine, als auch deren Verwendung.

Permanenterregte Synchronmaschinen werden in der Regel derart ausgelegt, dass sie im Fehlerfall, z.B. einem Stoßkurzschluss und/oder einem vordefinierten Maximalstrom im Wicklungssystem des Stators der permanenterregten Synchronmaschine ohne nennenswerte irreversible Entmagnetisierung der Permanentmagnete widerstehen. Ein derartiger Betriebszustand stellt hohe Anforderungen an die elektromagnetische Auslegung der permanenterregten Synchronmaschine, die verwendeten Magnetmaterialien als auch deren Anordnung im Rotor.

Besonders gefährdet sind dabei exponierte Bereiche der Permanentmagnete, wie z.B. die Ecken der Permanentmagnete, da sie bei Gegenfeldbelastung besonders hohen Gegenfeldern ausgesetzt sind. Dort wird es demnach als erstes zu irreversibler Entmagnetisierung der Permanentmagnete kommen.

Bei permanenterregten Synchronmaschinen mit vergrabenen Permanentmagneten werden die Permanentmagnete in im Rotor vorhandene Taschen axial eingesetzt. In der Regel werden die Permanentmagnete innerhalb der Taschen durch "Positionierungsstege" positioniert.

Diese Stege befinden sich bei bekannten Maschinenauslegungen auf der wellenseitigen Seite der Magnettasche, wie dies auch der US 9 531 226 B2 und US 2018/0248427 A1 zu entnehmen ist.

Die Gegenfeldstabilität der Maschine kann in der Regel auch durch die Verwendung von Magnetgüten mit hohem HcJ (Koerzitivfeldstärke des Permanentmagneten) und/oder durch den Einsatz von dickeren Magneten erreicht werden.

Diese höherwertigen Magnetgüten und/oder der höhere Materialeinsatz im Rotor erhöhen jedoch die Kosten einer derartigen permanenterregten Synchronmaschine.

Ausgehend davon liegt der Erfindung die Aufgabe zugrunde einen Rotor einer permanenterregten Synchronmaschine mit verbesserter Gegenfeldstabilität zu schaffen, um insbesondere bei industriellen Anwendungen einen zuverlässigen Betrieb, vor allem auch bei außergewöhnlichen Betriebszuständen gewährleisten zu können.

Die Lösung der gestellten Aufgabe gelingt durch einen Rotor einer rotatorischen permanenterregten Synchronmaschine mit vergrabenen, im Wesentlichen tangential angeordneten Permanentmagneten pro Pol, die in im Wesentlichen axial verlaufenden Ausnehmungen eines magnetisch leitfähigen Körpers, insbesondere eines axial geschichteten Blechpakets des Rotors angeordnet sind,

wobei jede Ausnehmung eine Tasche zur Aufnahme eines oder mehrerer Permanentmagneten aufweist, wobei sich an den entgegengesetzten Enden der Taschen, in tangentialer Erstreckung der Ausnehmung Flusssperren befinden,

wobei an der einem Außendurchmesser des Rotors zugewandten Seite der Ausnehmungen im Bereich zwischen Tasche und Flusssperre Mittel zur Erhöhung einer Gegenfeldstabilität vorgesehen sind,

wobei die Mittel zur Erhöhung einer Gegenfeldstabilität als Stege an den Enden der Taschen angeordnet sind und dabei zur Positionierung der Permanentmagneten in den Taschen beitragen,

wobei die Stege zumindest abschnittsweise die Taschen zur Aufnahme der Permanentmagneten bilden,

wobei die Stege derart ausgeführt sind, dass sie insbesondere in einem Fehlerfall und/oder Betriebszustand mit hoher Strombelastung, z.B. einem Stoßkurzschlussfall eine schützende Funktion für den Permanentmagneten ausüben,

wobei die Ausnehmung derart gestaltet ist, dass die Gegenfeldstabilität auch bei dem oder den Permanentmagneten im mittleren Bereich der Tasche gewährleistet ist, indem der geringste Abstand (D1) zwischen Mitte der Tasche und Außendurchmesser des Rotors größer gleich dem 1,3-fachen der radialen Dicke (D0) der Tasche entspricht,

und der geringste Abstand (D2) zwischen einer radial außenliegenden Ecke der Tasche und dem Außendurchmesser des Rotors größer gleich dem 0,7-fachen der radialen Dicke (D0) der Tasche entspricht,

also $D1 \geq 1{,}3 \times D0$ und $D2 \geq 0{,}7 \times D0$.

Die Lösung der gestellten Aufgabe gelingt auch durch eine permanenterregte Synchronmaschine mit einem erfindungsgemäßen Rotor.

Die Lösung der gestellten Aufgabe gelingt auch durch eine Förderanlage, einen Kompressor, einen Verdichter, einen Lüfter, eine Pumpe oder einen Traktionsantrieb mit zumindest einer erfindungsgemäßen permanenterregten Synchronmaschine.

Die verbesserter Gegenfeldstabilität wird erfindungsgemäß vor allem durch die Stege und die vergleichsweise radial tief im Rotorblechpaket angeordneten Permanentmagnete erreicht.

Durch diese Anordnung der Stege auf der luftspaltseitigen Seite der Tasche und die gezielt vergleichsweise tief in einem Rotor platzierten Permanentmagnete eines Pols wird die Gegenfeldstabilität dieses Rotors im Betrieb einer permanenterregten Synchronmaschine signifikant erhöht.

Diese Permanentmagnete sind mehr oder weniger tangential innerhalb des Rotors angeordnet. Der Permanentmagnet ist insbesondere quaderförmigen ausgeführt und befindet sich in einer Tasche. Die Tasche ist Teil einer Ausnehmung, wobei die Abschnitte, die nicht von dem oder den Permanentmagneten innerhalb der Ausnehmungen eingenommen wird, vorzugsweise als Flusssperren ausgebildet sind.

Diese Flusssperren weisen entweder Luft oder amagnetisches Material auf. Die Flusssperren in den Polen bzw. um die Taschen des Rotors sind notwendig, um magnetische Kurzschlüsse der Permanentmagnete im Bereich der jeweiligen Pole zu vermeiden.

Im Bereich zwischen den Flusssperren und den Taschen sind Stege vorgesehen, die auf der zu einem Außendurchmesser gewandten Seite der Ausnehmung angeordnet sind.

Die Stege an den Enden der Taschen im Bereich der Flusssperren leiten Gegenfelder um die Ecken der im Blechpaket des Rotors positionierten Permanentmagneten und führen dort zu einer deutlich homogeneren Belastung der Permanentmagneten, beispielsweise in einem Fehlerfall. Starke Feldüberhöhungen an diesen Ecken der Permanentmagnete werden somit merklich reduziert. Der zulässige Fehlerstrom im Wicklungssystem der permanenterregten Synchronmaschine erhöht sich allein dadurch bis zu 15%.

Durch die erfindungsgemäße, vergleichsweise radial tiefe Anordnung der Permanentmagneten im Blechpaket des Rotors, wird der parasitäre Einfluss der magnetischen Sättigung des Rotors vermieden oder zumindest verringert.

Während ein näher am Luftspalt bzw. Außendurchmesser befindlicher Permanentmagnet eine vergleichsweise starke Belastung in seinem Zentrum erfährt, ist nunmehr der radial tieferliegende Permanentmagnet nur sehr moderat belastet.

Der radial tiefer im Blechpaket des Rotors angeordnete Permanentmagnet ermöglicht erfindungsgemäß ein deutlich geringeres Sättigungsniveau im Rotor radial oberhalb des Permanentmagneten, zwischen Tasche und Luftspalt der dynamoelektrischen Maschine.

Bei einem hochliegenden Permanentmagneten - also näher am Außenumfang des Rotors positionierten Permanentmagneten - herrscht eine sehr hohe Sättigung. Gegenfelder werden in die Mitte des Permanentmagneten gedrängt und verursachen hier eine hohe Belastung.

Somit stellt sich eine optimale Wirkung der Stege, sei es als Positionshilfe oder magnetischer Entlastung, mit einer gleichzeitig erhöhter Gegenfeldbelastung des Permanentmagneten durch Sättigungseffekte ein. Somit entsteht eine durchweg homogene Belastung des oder der Permanentmagneten in einer Ausnehmung, was in Summe zu geringerer Belastung des oder der Permanentmagneten vor allem in den Ecken und im mittleren Bereich einer Tasche führt.

Diese Zusammenhänge lassen sich gemäß dem unabhängigen Anspruch 1 auch formelmäßig folgendermaßen zusammenfassen:

$$D1 >= 1,3 \times D0 \ und \ D2 >= 0,7 \times D0$$

Dabei ist:

D0 = radiale Dicke der Tasche des Permanentmagneten,

D1 = geringster Abstand zwischen Zentrum der Tasche des Permanentmagneten und Außendurchmesser des Rotors,

D2 = geringster Abstand zwischen Ecke der Tasche des Permanentmagneten und Außendurchmesser des Rotors.

Durch die erfindungsgemäße Geometrie der Taschen und der Ausnehmungen, insbesondere der Flusssperren lässt sich im Rotordesign je nach Auslegungsziel Magnetvolumen (Dicke) einsparen und/oder es wird die Möglichkeit eröffnet geringere Magnetgüten bzw. kostengünstigere Permanentmagnete einzusetzen ohne Abstriche bei der Performance einer permanenterregten Synchronmaschine eingehen zu müssen.

Je nach Auslegung ist es somit sogar möglich, z.B. im Magnetwerkstoff, auf schwere Seltene Erden - oder im Extremfall gänzlich auf Seltene Erden- für die Permanentmagnete zu verzichten.

Als schwere Seltene Erden werden dabei z.B. Terbium und Dysprosium verstanden. Während als leichte Seltene Erden z.B. Neodym (für die NdFeB-Permanentmagnete) bezeichnet wird.

Die Mittel zur Gegenfeldstabilität auf der dem Außenumfang des Rotors zugewandten Seite der Ausnehmungen im Bereich zwischen Flusssperren und Taschen sind besonders wirksam. Dort wirkt sich das Entmagnetisierungsfeld, das gegebenenfalls durch einen Stoßkurzschlussstrom in einem Wicklungssystem eines Stators generiert wird, normalerweise besonders negativ aus. Dies kann durch diese Mittel, die insbesondere als Halteelemente oder Stege ausgeführt sind, reduziert werden.

Ein derartiges Gegenfeld kann sich beispielsweise durch einen Stoßkurzschlussstrom, andere Belastungszustände der permanenterregten Synchronmaschine, hohe Überlastmomente, Stromfehleinprägungen des Umrichters und diverse Kurzschlussfehler im Wicklungssystem ergeben.

Vorteilhafterweise sind diese Stege bzw. Halteelemente Teil des Dynamoblechs des Rotors und sind mit ihm einstückig ausgeführt. Dies wird beispielsweise durch einen Stanzvorgang gewährleistet. Die Dimensionierung der Stege ist derart ausgeführt, dass sie z.B. durch einen Stoßkurzschlussstrom und das daraus resultierende Entmagnetisierungsfeld und der damit ggf. eintretenden Sättigung der Stege die schützende Funktion für den Permanentmagneten weiter ausüben können.

Mit anderen Worten: die schützende Funktion für den Permanentmagneten oder die Permanentmagneten wird unabhängig davon ausgeübt, ob der Steg bzw. das Halteelement in Sättigung geht. Gegebenenfalls wird bei zunehmender Sättigung die schützende Funktion der Stege etwas geringer.

Dabei werden diese Halteelemente, insbesondere diese Stege derart gestaltet, dass sie eine Ausdehnung in tangentialer Richtung, als auch eine Ausdehnung in radialer bzw. quasi-radialer Richtung aufweisen. In radialer bzw. quasi-radialer Richtung wird sich die Ausdehnung maximal bis zur Hälfte der magnetischen Dicke des benachbarten Permanentmagneten erstrecken, um nicht einen magnetischen Kurzschluss zwischen den Magnetpolen des Permanentmagneten zu generieren.

In tangentialer Richtung der Ausnehmung wird sich die Dimensionierung des Halteelements bzw. Steg unter anderem an der Sättigung des Materials der Dynamobleche des Rotorblechpakets orientieren.

In jedem Fall soll aber die schützende Funktion für den Permanentmagneten durch die Halteelemente, insbesondere Stege und die vergleichsweise "tiefe" Anordnung der Permanentmagnete im Blechpaket des Rotors gewährleistet werden.

Durch die Anordnung von Stegen auf der luftspaltseitigen Seite der Tasche wird die Gegenfeldstabilität des Rotors signifikant erhöht. Die Stege leiten die Gegenfelder sozusagen um die Ecken des Permanentmagneten und bewirken damit eine deutlich homogenere Belastung des Permanentmagneten im Fehlerfall. Die starken Feldüberhöhungen an den Ecken des Permanentmagneten werden erfindungsgemäß merklich reduziert. So kann damit beispielsweise der zulässige Fehlerstrom in dem Wicklungssystem des Stators erfindungsgemäß um ~15% gegenüber bisherigen Gestaltungen der Ausnehmungen einer Tasche für die Permanentmagneten eines Rotors erhöht sein.

Zusätzlich wird durch die Stege auch die Positionierungsfunktion der Permanentmagnete in den Ausnehmungen übernommen.

In einer weiteren Ausführung sind die Stege bzw. Haltelemente an den Taschen nicht immer beidseitig ausgeführt, sondern können auch - über die axiale Länge des Rotors betrachtet - alternierend angeordnet sein. Diese alternierende Anordnung der Halteelemente reicht auch für die Positionieraufgaben, da beispielsweise ein Permanentmagnet über die axiale Länge von zwanzig Blechen reicht, so dass die Haltelemente alternierend auch nur an jedem fünften Bleche bzw. Tasche vorhanden sein können. Entscheidend bei der Anzahl der Haltelemente ist dabei, ob die Gegenfeldstabilität durch die eingeschränkte Anzahl der Haltelemente weiter im geforderten Umfang gegeben ist. Die radial "tiefe" Position der Permanentmagnete bleibt dabei natürlich unverändert.

Der Rotor der permanenterregten Synchronmaschine weist eine geradzahlige Anzahl von Polen auf (zwei-, vier-, sechs-, acht- oder höherpolige Ausführungen), wobei jeder Pol nur eine, im Wesentlichen tangentiale Ausnehmung aufweist, die in axialer Richtung oder bei geschrägten Rotoren dementsprechend schräg verläuft.

In einer Ausführung sind die in tangentialer Erstreckung der Tasche am Ende befindlichen Flusssperren symmetrisch zu einer radialen Mittelsenkrechten der Ausnehmung angeordnet.

Jeder Pol kann, sofern er mehrere Permanentmagnete aufweist, auch Permanentmagnete unterschiedlicher Qualität und Materialeigenschaften aufweisen, um das Luftspaltfeld dementsprechend zu gestalten.

Eine Schrägung und/oder auch Staffelung des Rotors bzw. seiner Pole, über die axiale Länge des Rotors betrachtet, kann dabei weiterhin ausgeübt werden. Dies reduziert u.a. Rastmomente des permanenterregten Synchronmotors.

Als Anwendungen derartiger Rotoren in permanenterregten Synchronmaschinen sind vor allem in einem industriellen Umfeld, wie bei Pumpen, Lüfter, Verdichter, Kompressoren, Rollgängen und Förderanlagen vorgesehen, die eine sehr lange kontinuierliche Betriebsdauer aufweisen. Ebenso ist deren Einsatz bei Traktionsantrieben wie Miningfahrzeugen, E-Bussen, Straßenbahnen oder Zügen vorstellbar.

Die Erfindung sowie weitere vorteilhafte Ausgestaltungen der Erfindung, wurden anhand schematisch dargestellter Ausführungsbeispiele näher erläutert; darin zeigen:

FIG 1 einen prinzipiellen Längsschnitt einer dynamoelektrischen Maschine,

FIG 2 eine Detailansicht eines Querschnitts eines Rotors einer dynamoelektrischen Maschine,

FIG 3 und 4 weitere Detailansichten eines Querschnitts eines Rotors einer dynamoelektrischen Maschine

FIG 5 eine Detailansicht eines Querschnitts eines Rotors einer dynamoelektrischen Maschine mit ausgeprägten Stegen.

Es sei angemerkt, dass sich Begriffe wie "axial", "radial", "tangential" etc. auf die in der jeweiligen Figur bzw. im jeweils beschriebenen Beispiel zum Einsatz kommende Achse 6 beziehen. Mit anderen Worten beziehen sich die Richtungen axial, radial, tangential stets auf eine Drehachse eines Rotors 9 und damit auf die entsprechende Symmetrieachse eines Stators 8. Dabei beschreibt "axial" eine Richtung parallel zur Achse 6, "radial" beschreibt eine Richtung orthogonal zur Achse 6, auf diese zu oder auch von ihr weg, und "tangential" ist eine Richtung, die in konstantem radialem Abstand zur Achse 6 und bei konstanter Axialposition kreisförmig um die Achse herum gerichtet ist. Der Ausdruck "in Umfangsrichtung" ist mit "tangential" gleichzusetzen.

In Bezug auf eine Fläche, beispielsweise eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Der Begriff "benachbart" soll im Zusammenhang mit Bauteilen, bspw. mit Spulen oder Statorzähnen, ausdrücken, dass sich im Falle von "benachbarten Bauteilen" zwischen diesen beiden Bauteilen insbesondere kein weiteres derartiges Bauteil befindet, sondern höchstens ein leerer Zwischenraum oder gegebenenfalls ein andersartiges Bauteil.

Unter dem Ausdruck "koaxiale Bauteile", bspw. koaxiale Komponenten wie Rotor 9 und Stator 8, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine (Teil-) Komponente vorzugsweise vollständig in der zu ihr komplementären (Teil-) Komponente angeordnet werden kann, so dass sich die innere Oberfläche der einen Komponente, beispielsweise eine Längsseite einer Tasche 36 und die äußere Oberfläche der anderen Komponente, beispielsweise ein Permanentmagnet 14 idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden. Dabei ist aber nicht grundsätzlich ausgeschlossen, dass zwischen zwei komplementären Formen ein Raum vorhanden ist, der beispielsweise durch Luft oder Kleber oder Vergussmasse zumindest teilweise eingenommen wird.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die einzelnen Merkmale der folgenden Ausführungen sind auch in nahezu beliebiger Kombination zusammensetzbar.

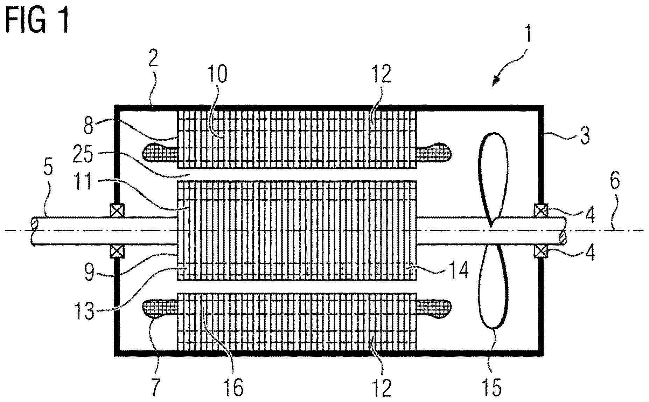

FIG 1 zeigt in einem prinzipiellen Längsschnitt eine dynamoelektrische Maschine 1, insbesondere eine permanenterregte Synchronmaschine, mit einem Stator 8 und einem Rotor 9, der über eine Momentenübertragungsanordnung 41 drehfest mit einer Welle 5 verbunden ist. Der Stator 8 weist in nicht näher dargestellten Nuten eines Blechpakets 10 ein Wicklungssystem 7 auf, dass an den Stirnseiten des Blechpakets 10 Wickelköpfe ausbildet.

Der Rotor 9 weist in dieser Ausführungsform vergrabene Permanentmagnete 14, insbesondere quaderförmige Permanentmagnete 14 auf, die in im Wesentlichen axial verlaufenden Taschen 36 eines Blechpakets 11 des Rotors 9 angeordnet sind. Als vergrabene Permanentmagnete 14 werden dabei Permanentmagnete 14 betrachtet, die nicht an der Außenoberfläche des Rotors 9 angeordnet sind.

Durch elektromagnetische Wechselwirkung des Rotors 9 mit einem durch das Wicklungssystem 7 bestromten Stator 8 wird eine Welle 5 des Rotors 9 um eine Achse 6 in Drehung versetzt. Der Rotor 9 ist dabei vom Stator 8 durch einen Luftspalt 25 getrennt. Der Stator 8 ist in einem Gehäuse 2 angeordnet. Lagerschilde 3 positionieren über Lager 4 die Welle 5.

Eine Kühlung der permanenterregten Synchronmaschine 1 kann über einen Lüfter, insbesondere Eigenlüfter 15 und Kühlkanäle 12 im Blechpaket 10 des Stators 8 erfolgen. Es sind ebenso auch axial verlaufende Kühlkanäle im Rotor 9 vorstellbar.

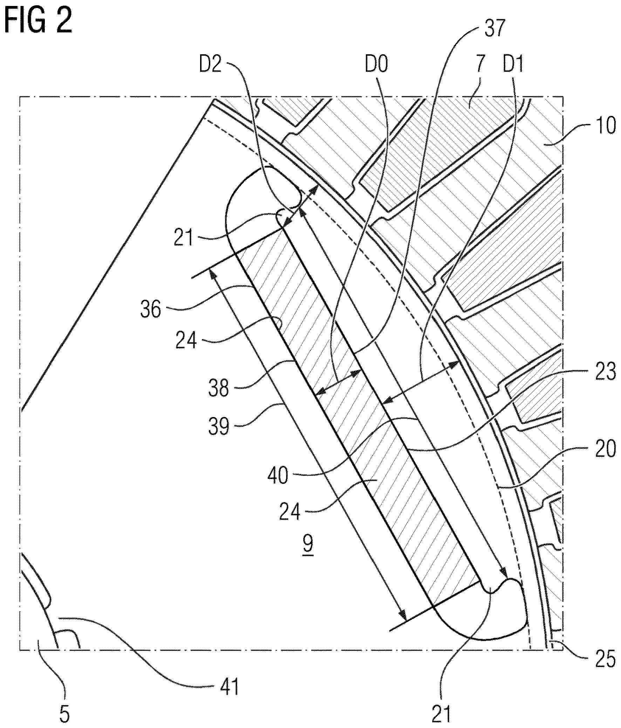

FIG 2 zeigt eine Detailansicht eines Querschnitts der dynamoelektrischen Maschine 1, wobei das Wicklungssystem 7 des Stators 8 dort als Zahnspule ausgeführt ist. Bei diesem Wicklungssystem 7 sind pro Nut 16 zwei unterschiedliche Seiten benachbarter Zahnspulen vorgesehen. Die Erfindung lässt sich auch bei anderen Wicklungssystemen des Stators 8, z.B. Zahnspulenwicklungen, verteilten Wicklungen, wie Einschicht-Ganzlochwicklungen, Zweischicht-Ganzlochwicklungen (gesehnt) und allgemein bei Zweischicht-Bruchlochwicklungen einsetzen. Ebenso sind die dabei eingesetzten Drahtformen (Rund- und Flachdrahtwicklungen ebenso wie Litzenleitern) nahezu beliebig.

Durch den Luftspalt 25 vom Stator 8 getrennt, ist der Rotor 9 mit seinen Permanentmagneten 14 angeordnet. Diese Permanentmagnete 14 sind in dieser Ausführungsform mehr oder weniger tangential innerhalb des Rotors 9 angeordnet. Der Permanentmagnet 14 ist insbesondere quaderförmig ausgeführt und befindet sich in einer Tasche 36. Die Tasche 36 ist Teil einer Ausnehmung 13, wobei der Abschnitt, der nicht vom Permanentmagneten 14 innerhalb der Ausnehmungen 13 eingenommen wird, vorzugsweise als Flusssperren 34 ausgebildet sind.

Diese Flusssperren 34 weisen entweder Luft oder amagnetisches Material auf. Die Flusssperren 34 in den Polen 19 bzw. um die Taschen 36 des Rotors 9 sind notwendig, um magnetische Kurzschlüsse der Permanentmagnete 14 im Bereich der jeweiligen Pole 19 zu vermeiden.

Zwischen den Flusssperren 34 und den Taschen 36 sind Stege 21 vorgesehen, die auf der zum Luftspalt 25 gewandten Seite der Ausnehmung 13 vorgesehen sind. Durch diese erfindungsgemäße Anordnung der Stege 21 kann eine Entmagnetisierung der Permanentmagnete 14, insbesondere in den Randbezirken der Permanentmagnete 14, beispielsweise durch einen Stoßkurzschluss im Wicklungssystem 7 des Stators 8 überwiegend vermieden werden.

Diese Zusammenhänge lassen sich gemäß dem unabhängigen Anspruch 1 auch formelmäßig fol-

gendermaßen zusammenfassen:

$$D1 >= 1,3xD0 \quad und \quad D2 >= 0,7xD0$$

Dabei ist:

D0 = radiale Dicke der Tasche des Permanentmagneten,

D1 = geringster Abstand zwischen Zentrum der Tasche des Permanentmagneten und Außendurchmesser des Rotors,

D2 = geringster Abstand zwischen Ecke der Tasche des Permanentmagneten und Außendurchmesser des Rotors.

Für das Ausführungsbeispiel gemäß FIG 2 gilt demnach:

$$D1 = 1,8xD0 \quad und \quad D2 = 1,1xD0$$

Daraus ergibt sich auch der Verlauf der Flusssperren 34 einer Ausnehmung 13, bei der dann der Abstand 40 der Flusssperren 34 radial über der Ausnehmung 13 zwischen dem 0,9-fachen und dem 1,1-fachen der tangentialen Länge der Tasche 36 (Abstand 39 zwischen zwei Stegen 21 einer Ausnehmung 13) entspricht.

Die Ausnehmung 13 weist einen Bereich auf, bei dem der oder die Permanentmagnete 14 angeordnet sind. Dies wird als Tasche 36 bezeichnet. Die Permanentmagnete 14 liegen dabei an den Längsseiten 37, 38 der Tasche 36, insbesondere an der außenliegenden Längsseite 37 komplementär an. Mit anderen Worten, es ist ein durchgängiger Kontakt - gegebenenfalls mit einer Klebeschicht versehen - von Blechen und Permanentmanget 14 vorhanden.

In der Regel ist die Tasche 36 etwas größer gestaltet als der Permanentmagnet 14, da Platz zum Fügen und/oder Toleranzen berücksichtig werden müssen. Dieser gegebenenfalls freie Raum wird dann mit Kleber oder Vergussmasse gefüllt, bzw. kann bei anderen Befestigungsarten, wie Verklemmen oder Verstemmen auch nur Luft sein.

Es gibt somit eine außenliegende Längsseite 37 und eine innenliegende Längsseite 38 der Tasche 36. Die außenliegende Längsseite 37 weist im Wesentlichen zum Luftspalt 25, die innenliegende Längsseite 38 zur Welle 5 bzw. Achse 6. Der Permanentmagnet 14 ist in die Tasche 36 derart eingesetzt, dass sein Nordpol und sein Südpol jeweils den Längsseiten 37, 38 zugewandt sind. D.h., der Nordpol befindet sich beispielsweise an der außenliegenden Längsseite 37 und der Südpol demnach auf der innenliegende Längsseite 38. Der Permanentmagnet 14 hat also eine Luftspaltseite 23 und eine Achsseite 24.

Der Übergangsbereich zwischen Nordpol und Südpol des Permanentmagnets 14 verläuft im Wesentlichen tangential - mittig im Permanentmagneten 14 zwischen den beiden Längsseiten der Tasche 36 und senkrecht zur Magnetisierungsrichtung des Permanentmagneten 14.

In dem Bereich des Übergangs von der Tasche 36 zu den Flusssperren 34 sind Stege 21 bzw. Halterungen an der zum Luftspalt 25 gewandten Seite der Ausnehmungen 13 vorhanden. Neben dem Vorteil, dass diese Stege 21 bzw. Halterungen etwaigen Entmagnetisierungserscheinungen bei einem Stoßkurzschluss des Wicklungssystems 7 entgegenwirken, sind diese Stege 21 bzw. Halterungen auch zur Positionierung und Fixierung der Permanentmagnete 14 in der jeweiligen Ausnehmung 13 geeignet.

Nachdem in Axialrichtung betrachtet der Rotor 9 axial geschichtete Bleche aufweist, ist in einer weiteren Ausführung auch vorstellbar, dass derartige Stege 21 und Halterungen nur an jedem x-ten Blech oder wechselseitig vorhanden sind. Diese Ausgestaltung reicht eindeutig zur Positionierung der Permanentmagnete 14, und je nach dem zu erwartenden Stoßkurzschlussstrom auch gegenüber den Entmagnetisierungserscheinungen.

Die Permanentmagnetanordnung einer Tasche 36 bzw. eines Pols 19 bzw. einer Ausnehmung 13 kann demnach einen einstückig ausgeführten Permanentmagnet 14 oder mehrere Permanentmagnete 14 in axialer und/oder tangentialer Richtung aufweisen.

Nach den Figuren 2 bis 4 sind die Stege 21 und die Flusssperren 34 bzgl. einer radialen Mittelsenkrechten der Ausnehmung 13 achsensymmetrisch aufgebaut.

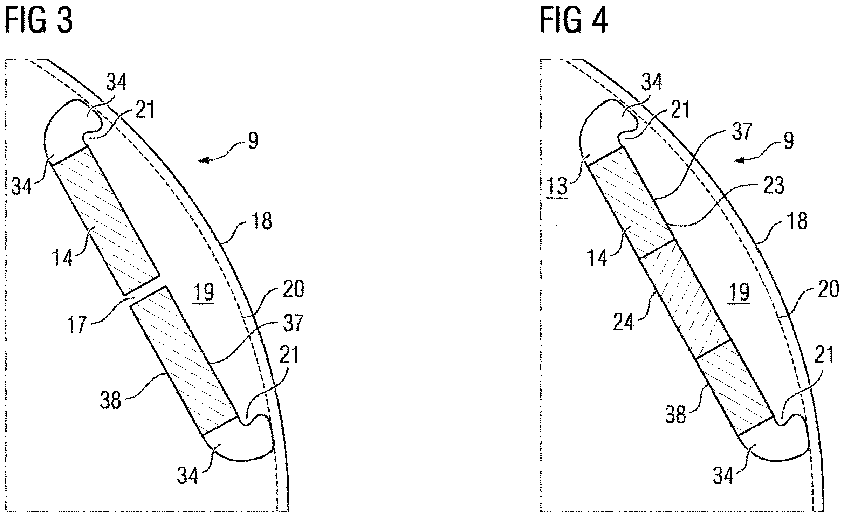

In FIG 3 ist dabei vorzugsweise mittig in der Ausnehmung 13 ein radialer Blechsteg 17 vorgesehen, der beidseitig an einen Permanentmagneten 14 grenzt. Der Blechsteg 17 ist einstückig mit dem Blech verbunden. Die Tasche 36 einer Ausnehmung 13 ist also in zwei Taschenabschnitte aufgeteilt. Es sind auch mehrere Taschenabschnitte pro Tasche 36 denkbar.

FIG 4 zeigt drei Permanentmagnete 14 in der Tasche 36 der Ausnehmung 13, die direkt - ohne Blechsteg 17 - tangential nebeneinander angeordnet sind.

In axialer Richtung kann gemäß den Ausführungen nach FIG 2 bis FIG 4 nur ein oder mehrere Permanentmagnete 14 vorgesehen sein - je nach axialer Länge des Blechpakets 11 und/oder einer eventuellen Staffelung des Blechpakets 11 des Rotors 9.

Die Pole 19 des Rotors 9 sind, in Umfangsrichtung betrachtet bzgl. ihrer Magnetisierungsrichtung alternierend angeordnet.

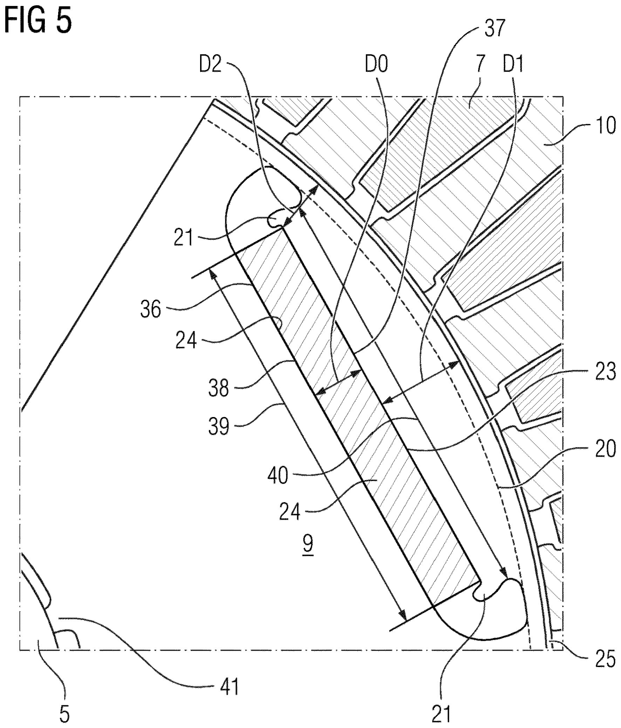

FIG 5 zeigt eine ähnliche Ausführung wie FIG 2, jedoch sind dabei die Stege 21 prägnanter ausgeführt, um einen vergleichsweise besseren Halt des Permanentmagneten 14 in der Tasche 36 zu gewährleisten. Dabei ist die quasi-radiale Erstreckung der Stege 21 etwas länger als in FIG 2. Diese Erstreckung bewegt sich zwischen ca. 0,7 bis 1mm. Bevorzugt wird aus elektromagnetischer Sicht - zumindest bei gewissen Ausführungen - eine quasi-radiale Erstreckung der Stege 21 von 0,75mm. Ansonsten wird auch auf die Beschreibung zu FIG 2 verwiesen.

Die der Erfindung zugrundeliegende Idee lässt sich ebenso auf permanenterregte Synchronmaschinen mit Außenläufer übertragen, wie sie z.B. bei direkt angetriebenen Generatoren von Windkraftanlagen eingesetzt werden.

Derartige Rotoren 9 werden vor allem in permanenterregten Synchronmaschinen 1 eingesetzt, die im industriellen Umfeld betrieben werden. Dabei sind sie als Antriebe von Pumpen, Lüfter, Verdichter, Kompressoren, Rollgängen, Förderanlagen vorgesehen, die eine sehr lange kontinuierliche Betriebsdauer mit vergleichsweise geringen Lastschwankungen aufweisen.

Derartige permanenterregte Synchronmaschinen 1 sind auch bei Traktionsantrieben wie Miningfahrzeugen, E-Bussen, Straßenbahnen oder Zügen einsetzbar, um durch die Erhöhung der Gegenfeldstabilität einen zuverlässigeren Betrieb zu gewährleisten.

**Patentansprüche**

1. Rotor (9) einer rotatorischen permanenterregten Synchronmaschine (1) mit vergrabenen, im Wesentlichen tangential angeordneten Permanentmagneten (14) pro Pol, die in im Wesentlichen axial verlaufenden Ausnehmungen (13) eines magnetisch leitfähigen Körpers, insbesondere eines axial geschichteten Blechpakets des Rotors (9) angeordnet sind,

   wobei jede Ausnehmung (13) eine Tasche (36) zur Aufnahme eines oder mehrerer Permanentmagneten (14) aufweist,
   wobei sich an den entgegengesetzten Enden der Taschen (36), in tangentialer Erstreckung der Ausnehmung (13) Flusssperren (34) befinden,
   wobei an der einem Außendurchmesser des Rotors (9) zugewandten Seite der Ausnehmungen (13) im Bereich zwischen Tasche (36) und Flusssperre (34) Mittel zur Erhöhung einer Gegenfeldstabilität vorgesehen sind,
   wobei die Mittel zur Erhöhung einer Gegenfeldstabilität als Stege (21) an den Enden der Taschen (36) angeordnet sind und dabei zur Positionierung der Permanentmagneten (14) in den Taschen (36) beitragen,
   wobei die Stege (21) zumindest abschnittsweise die Taschen (36) zur Aufnahme der Permanentmagneten (14) bilden,
   wobei die Stege (21) derart ausgeführt sind, dass sie insbesondere in einem Fehlerfall und/oder Betriebszustand mit hoher Strombelastung, z.B. einem Stoßkurzschlussfall eine schützende Funktion für den Permanentmagneten (14) ausüben,
   wobei die Ausnehmung (13) derart gestaltet ist, dass die Gegenfeldstabilität auch den oder die Permanentmagnete (14) im mittleren Bereich der Tasche (36) gewährleistet ist, indem der geringste Abstand (D1) zwischen Mitte der Tasche (36) und Außendurchmesser (18) des Rotors (9) größer gleich dem 1,3-fachen der radialen Dicke (D0) der Tasche (36) entspricht, und der geringste Abstand (D2) zwischen einer radial außenliegenden Ecke der Tasche (36) und dem Außendurchmesser des Rotors (9) größer gleich dem 0,7-fachen der radialen Dicke (D0) der Tasche (36) entspricht,
   also D1 $\geq$ 1,3xD0 und D2 $\geq$ 0,7xD0.

2. Rotor (9) einer rotatorischen permanenterregten Synchronmaschine (1) nach, Anspruch 1, **dadurch gekennzeichnet, dass** die Mittel zur Erhöhung einer Gegenfeldstabilität, insbesondere die Halteelemente in axialer Richtung des Rotors (9) alternierend an den Taschen (36) der Bleche des Rotors (9) angeordnet sind.

3. Rotor (9) einer rotatorischen permanenterregten Synchronmaschine (1) nach einem der vorhergehenden Ansprüche, **dadurch gekennzeichnet, dass** die Flusssperren (34) an den Enden der jeweiligen Taschen (36) im Wesentlichen in tangentialer Erstreckung der Ausnehmungen (13) und Richtung Außendurchmesser des Rotors (9) ausgerichtet sind, wobei eine radiale Mindestbreite Blech zum Außendurchmesser (18) des Rotors (9) erhalten bleibt.

4. Rotor (9) einer rotatorischen permanenterregten Synchronmaschine (1) nach einem der vorhergehenden Ansprüche, **dadurch gekennzeichnet, dass** radiale bzw. quasi-radiale Erstreckung der Stege (21), weg vom Außendurchmesser des Rotors (9), maximal bis zur Hälfte der magnetischen Dicke (D0) des in der Tasche (36) benachbarten Permanentmagneten (14) reicht, insbesondere eine radiale bzw. quasi-radiale Erstreckung von ca. 0,7mm bis 1mm aufweist.

5. Rotor (9) einer rotatorischen permanenterregten Synchronmaschine (1) nach einem der vorhergehenden Ansprüche, **dadurch gekennzeichnet, dass** pro Pol (19) und/oder Ausnehmung (13) zumindest ein Permanentmagnet (14) vorgesehen ist.

6. Rotor (9) einer rotatorischen permanenterregten Synchronmaschine (1) nach einem der vorhergehenden Ansprüche, **dadurch gekennzeichnet, dass** ein Abstand (39) der Flusssperren (34) der Ausnehmung (13) radial über der Ausnehmung (13) zwischen dem 0,9-fachen und dem 1,1-fachen der tangentialen Länge der Tasche (36), also einem Abstand (40) zwischen zwei Stegen (21) einer Ausnehmung (13) entspricht.

7. Permanenterregte Synchronmaschine (1) mit einem Stator (8) und einem davon durch einen Luftspalt (25) beabstandeten Rotor (9) mit vergrabenen, im Wesentlichen tangential angeordneten Permanentmagneten (14) pro Pol, die in im Wesentlichen axial verlaufenden Ausnehmungen (13) eines magnetisch leitfähigen Körpers, insbesondere eines axial geschichteten Blechpakets des Rotors (9) angeordnet sind,

wobei jede Ausnehmung (13) eine Tasche (36) zur Aufnahme eines oder mehrerer Permanentmagneten (14) aufweist,
wobei sich an den entgegengesetzten Enden der Taschen (36), in tangentialer Erstreckung der Ausnehmung (13) Flusssperren (34) befinden,
wobei an der einem Außendurchmesser des Rotors (9) zugewandten Seite der Ausnehmungen (13) im Bereich zwischen Tasche (36) und Flusssperre (34) Mittel zur Erhöhung einer Gegenfeldstabilität vorgesehen sind,
wobei die Mittel zur Erhöhung einer Gegenfeldstabilität als Stege (21) an den Enden der Taschen (36) angeordnet sind und dabei zur Positionierung der Permanentmagneten (14) in den Taschen (36) beitragen,
wobei die Stege (21) zumindest abschnittsweise die Taschen (36) zur Aufnahme der Permanentmagneten (14) bilden,
wobei die Stege (21) derart ausgeführt sind, dass sie insbesondere in einem Fehlerfall und/oder Betriebszustand mit hoher Strombelastung, z.B. einem Stoßkurzschlussfall eine schützende Funktion für den Permanentmagneten (14) ausüben, wobei die Ausnehmung (13) derart gestaltet ist, dass die Gegenfeldstabilität auch den oder die Permanentmagnete (14) im mittleren Bereich der Tasche (36) gewährleistet ist, indem der geringste Abstand (D1) zwischen Mitte der Tasche (36) und Außendurchmesser (18) des Rotors (9) größer gleich dem 1,3-fachen der radialen Dicke (D0) der Tasche (36) entspricht,
und der geringste Abstand (D2) zwischen einer radial außenliegenden Ecke der Tasche (36) und dem Außendurchmesser des Rotors (9) größer gleich dem 0,7-fachen der radialen Dicke (D0) der Tasche (36) entspricht,
also D1 ≥ 1,3xD0 und D2 ≥ 0,7xD0.

8. Förderanlage, Kompressor, Verdichter, Lüfter, Pumpe oder Traktionsantrieb mit zumindest einer permanenterregten Synchronmaschine (1) nach Anspruch 7.

FIG 1

FIG 2

FIG 4

FIG 3

# FIG 5

Europäisches
Patentamt

European
Patent Office

Office européen
des brevets

**EUROPÄISCHER RECHERCHENBERICHT**

Nummer der Anmeldung

EP 23 16 7327

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 818 139 A (YAMAGIWA AKIO [JP] ET AL) 6. Oktober 1998 (1998-10-06) * Spalte 7, Zeilen 22-25; Abbildungen 1,8 * ----- | 1-8 | INV. H02K1/276 |
| A | EP 2 933 903 B1 (MITSUBISHI ELECTRIC CORP [JP]) 22. Januar 2020 (2020-01-22) * Abbildungen 1-4 * ----- | 1-8 | |
| A | EP 3 591 807 A1 (JULI MOTORENWERK S R O [CZ]) 8. Januar 2020 (2020-01-08) * Abbildungen 1,2 * ----- | 1-8 | |
| A | CN 106 329 771 A (FARADAY (BEIJING) NETWORK TECH CO LTD) 11. Januar 2017 (2017-01-11) * Abbildungen 2,4,6,7 * ----- | 1-8 | |
| A | US 9 531 226 B2 (FANUC CORP [JP]) 27. Dezember 2016 (2016-12-27) * Abbildung 2 * ----- | 1-8 | RECHERCHIERTE SACHGEBIETE (IPC) |
| A | US 9 929 610 B2 (MITSUBISHI ELECTRIC CORP [JP]) 27. März 2018 (2018-03-27) * Abbildungen 1, 11 * ----- | 1-8 | H02K |
| A | US 10 855 126 B2 (MITSUBISHI ELECTRIC CORP [JP]) 1. Dezember 2020 (2020-12-01) * Abbildungen 1,3 * ----- | 1-8 | |

Der vorliegende Recherchenbericht wurde für alle Patentansprüche erstellt

| Recherchenort | Abschlußdatum der Recherche | Prüfer |
|---|---|---|
| Den Haag | 14. September 2023 | Güvener, Cem |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................................
& : Mitglied der gleichen Patentfamilie, übereinstimmendes Dokument

EPO FORM 1503 03.82 (P04C03)

EP 4 447 273 A1

**ANHANG ZUM EUROPÄISCHEN RECHERCHENBERICHT**
**ÜBER DIE EUROPÄISCHE PATENTANMELDUNG NR.**

EP 23 16 7327

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-09-2023

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 5818139 | A | | 06-10-1998 | CN | 1154182 | A | 09-07-1997 |
| | | | | DE | 69505674 | T2 | 20-05-1999 |
| | | | | EP | 0773621 | A1 | 14-05-1997 |
| | | | | ES | 2126300 | T3 | 16-03-1999 |
| | | | | US | 5818139 | A | 06-10-1998 |
| | | | | WO | 9603793 | A1 | 08-02-1996 |
| EP 2933903 | B1 | | 22-01-2020 | CN | 104081629 | A | 01-10-2014 |
| | | | | CN | 203813549 | U | 03-09-2014 |
| | | | | EP | 2933903 | A1 | 21-10-2015 |
| | | | | ES | 2773911 | T3 | 15-07-2020 |
| | | | | JP | 5855680 | B2 | 09-02-2016 |
| | | | | JP | WO2014091579 | A1 | 05-01-2017 |
| | | | | US | 2015263574 | A1 | 17-09-2015 |
| | | | | WO | 2014091579 | A1 | 19-06-2014 |
| EP 3591807 | A1 | | 08-01-2020 | KEINE | | | |
| CN 106329771 | A | | 11-01-2017 | KEINE | | | |
| US 9531226 | B2 | | 27-12-2016 | CN | 103872824 | A | 18-06-2014 |
| | | | | CN | 203722358 | U | 16-07-2014 |
| | | | | DE | 102013021110 | A1 | 18-06-2014 |
| | | | | JP | 5722301 | B2 | 20-05-2015 |
| | | | | JP | 2014121202 | A | 30-06-2014 |
| | | | | US | 2014167551 | A1 | 19-06-2014 |
| US 9929610 | B2 | | 27-03-2018 | CN | 104823357 | A | 05-08-2015 |
| | | | | CN | 203691092 | U | 02-07-2014 |
| | | | | EP | 2916435 | A1 | 09-09-2015 |
| | | | | JP | 5931213 | B2 | 08-06-2016 |
| | | | | JP | WO2014069438 | A1 | 08-09-2016 |
| | | | | US | 2015256038 | A1 | 10-09-2015 |
| | | | | WO | 2014068655 | A1 | 08-05-2014 |
| | | | | WO | 2014069438 | A1 | 08-05-2014 |
| US 10855126 | B2 | | 01-12-2020 | CN | 108352743 | A | 31-07-2018 |
| | | | | DE | 112015007131 | T5 | 02-08-2018 |
| | | | | GB | 2559493 | A | 08-08-2018 |
| | | | | JP | 6422595 | B2 | 14-11-2018 |
| | | | | JP | WO2017085814 | A1 | 29-03-2018 |
| | | | | KR | 20180048819 | A | 10-05-2018 |
| | | | | US | 2018219438 | A1 | 02-08-2018 |
| | | | | WO | 2017085814 | A1 | 26-05-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9531226 B2
- US 20180248427 A1